# EUROPEAN PATENT SPECIFICATION

(11) **EP 3 346 517 B1**
(45) Date of publication and mention of the grant of the patent: **30.08.2023**
(21) Application number: 17150260.2
(22) Date of filing: 04.01.2017
(51) Int. Cl.: H01M 10/625, H01M 50/209, H01M 10/647, H01M 10/6557, H01M 50/249, H01M 50/503, H01M 10/613

(54) **BATTERY SYSTEM**
BATTERIESYSTEM
SYSTÈME DE BATTERIE

(43) Date of publication of application: 11.07.2018
(73) Proprietor: Samsung SDI Co., Ltd, Gyeonggi-do 17084 (KR)
(72) Inventor: WÜNSCHE, Ralph, 8010 Graz (AT); STOJANOVIC, Oliver, deceased (AT); KRIEGER, Horst, 8453 St. Johann i. S. (AT); HOCHGATTERER, Nikolaus, 8010 Graz (AT); AMREICH, Werner, 8570 Voitsberg (AT)
(74) Representative: Gulde & Partner

(56) References cited:
- EP-A1- 3 273 500
- WO-A1-2015/126209
- DE-A1-102011 107 007
- US-A1- 2013 266 840
- US-A1- 2015 270 516

## Description

### Field of the Invention

The present invention relates to a battery system and to a vehicle comprising such battery system.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. The battery management functions can then be at least partially realized on either module or submodule level and thus interchangeability can be improved. One or more battery modules are mechanically and electrically integrated, equipped with a thermal management system and set up for communication with one or more electrical consumers in order to form a battery system.

To provide electrical integration of a battery system in modular designs either submodules with a plurality of cells connected in parallel are connected in series (*XsYp*) or submodules with a plurality of cells connected in series are connected in parallel (*XpYs*). *XsYp* type submodules can generate high voltages but the voltage level of each cell hast to be controlled individually and thus wiring complexity is increased. In *XpYs* type submodules the voltage levels of the cells connected in parallel are automatically balanced. Thus it is sufficient to control the voltage on submodule level and wiring complexity is reduced. In submodules of cells connected in parallel the capacitance of the cells add up and thus *XpYs* type submodules are mostly used for low capacitance cells.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers. Battery systems usually comprise a battery management system for processing this information.

To provide thermal control of a battery system a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cooling devices for effectively emitting/discharging/dissipating heat from the cells is required.

The mechanical integration of a battery system requires appropriate mechanical connection of the individual components, e.g. of battery submodules among themselves and with structures of a system providing the electrical consumers, e.g. a vehicle. These connections must be designed to remain functional and save during the average service life of the battery system and under the stresses provided during use of the consumers.

Battery systems according to the prior art usually comprise vertically stacked battery cells as well as cooling means disposed between each pair of adjacent battery cells. Thus, the battery systems according to the prior art might comprise a large extension in the vertical direction and might be bulky in general. Especially in mobile applications, such battery systems are disadvantageous due to their large installation space requirements. Exemplarily such battery systems are not suitable for being mounted underneath the floor of an electric vehicle.

DE 10 2011 107007 A1 discloses that the battery modules of a battery system are placed on respective horizontal cooling plates, are separated by vertical cooling plates and are electrically connected to each other via circuit boards integrated in a T-shaped system cover. It is thus an object of the present invention to overcome or reduce at least some of the drawbacks of the prior art and to provide a battery system with reduced installation space requirements, particularly for mobile applications such as an electric vehicle.

### Summary of the Invention

A first aspect of the present invention is a battery system according to the appended claims. The battery system comprises a system frame with a pair of first frame beams and a pair of second frame beams. The first frame beams extend in first direction and the second frame beams extend in a second direction that is substantially perpendicular to the first direction. Substantially perpendicular refers to an angular range between 85° and 95°. Preferably the first direction and the second direction are perpendicular to each other. Thus, the system frame is substantially rectangular. A plurality of traverses is assembled to the pair of first frame beams. The traverses extend in the second direction and are spaced apart from each other in the first direction. In other words, two adjacent traverses are substantially parallel and comprise a lateral distance to each other. By attaching the traverses to the first frame beams, the system frame is stiffened and mechanically stabilized. The battery system further comprises a plurality of battery modules, wherein each battery module is assembled to at least one traverse. Each battery module comprises a plurality of aligned battery cells that are arranged in the second direction. In the plurality of aligned battery cells the battery cells are stacked in the second direction, wherein the terminals of the individual battery cells can be oriented in the first direction, i.e. facing the first direction, or can be oriented in a third direction that is perpendicular to the first direction and to the second direction, i.e. facing the third direction.

According to the present invention, the first frame beams comprise coolant supply lines that are preferably configured for being connected to an external coolant circuit. At least one traverse, preferably each of the plurality of traverses, comprises a coolant duct that is fluidly connected to the coolant supply lines. Thus, according to the present invention, a coolant can be provided from an external coolant circuit to the coolant supply line of at least one of the first frame beams. From there, the coolant flows through the coolant duct of the at least one of the plurality of traverses assembled to the first frame beams. From there, the coolant flows into the coolant supply line of the same or the other first frame beam and back into the external coolant circuit. According to the present invention, the cooling of the battery cells occurs via the traverses and thus cooling means in a ground plate, a cover or between adjacent battery cells can be omitted. The traverses thus stabilize the system frame and ensure sufficient cooling of the battery cells at the same time. Thus, a less bulky battery system with low height and low installation space requirements is provided.

According to the present invention, the coolant supply lines are integrated in the respective first frame beam. Further, the coolant duct is integrated in the at least one traverse. According to the embodiment invention, coolant piping external to the first frame beams or the traverses can be omitted and thus installation space requirements of the battery system are further reduced. By integrating the coolant supply lines and/or the coolant ducts into the first frame beams and the traverses, respectively, the coolant, the battery cells and electrical connection means are well separated and thus malfunctions can be avoided.

Further preferred, each of the plurality of traverses comprises a first front surface and a second front surface that are respectively connected to one of the first frame beams. In other words, a first front surface of each traverse is assembled to a first frame beam and a second front surface of each traverse is assembled to another first frame beam facing the former first frame beam. According to this preferred embodiment, coolant distributors are disposed on or in at least one of the first front surface and the second front surface. Coolant distributors that are provided in each of the front surfaces are configured to connect a coolant duct to coolant supply lines integrated in each of the first frame beams. A plurality of coolant distributors disposed in a single front surface are configured to connect to a coolant duct to a plurality of coolant supply lines integrated in one of the first frame beams.

In a preferred embodiment, the pair of first frame beams and the pair of second frame beams are extruded profiles that are welded together to form a substantially rectangular frame. Particularly preferred, the first frame beams are aluminum extrusion profiles. Thus, a light weight system frame is easily produced. Further preferred, each of the battery cells comprises a bottom surface and lateral walls connected vertically to end portions of the bottom surface. According to this embodiment, at least one side wall of each battery cell is in thermal contact with a traverse. Thus, heat dissipation occurs mainly via side walls of the battery cells.

Further preferred, each of the battery cells comprises a bottom surface, a pair of first lateral side walls and a pair of second lateral side walls. The first and second lateral side walls extend vertically from respective ends of the bottom surface. The second lateral side walls comprise a width that is smaller than that of the first lateral side walls. Further preferred, each traverse extends in the second direction and is in thermal contact with a second lateral side wall. According to this embodiment, the second lateral side walls are facing into the first direction. In other words, a dense packaging of the battery cells is achieved by aligning them such that wide lateral side walls of adjacent cells are facing each other, while cooling occurs solely via the plurality of narrow lateral side walls of the aligned battery cells.

According to a preferred embodiment of the battery systems, the traverses are spaced apart in the second direction at a distance from each other that substantially corresponds to the width of a first lateral side walls of the battery cells. In other words, one plurality of aligned battery cells is disposed between two adjacent traverses. Thus, improved cooling of the plurality of aligned battery cells occurs via both narrow lateral side walls of each battery cell.

According to the invention, each battery module comprises a first plurality and a second plurality of aligned battery cells, both arranged in the second direction. Each traverse of the battery system is disposed between a first plurality and a second plurality of aligned battery cells. Thus, the first plurality and second plurality of aligned battery cells are spaced apart from each other in the first direction. According to the invention, at least one side wall of each battery cell of the first plurality and of each battery cell of the second plurality of battery cells is in thermal contact with a traverse. Further, adjacent traverses are spaced apart at a distance from each other corresponding to the width of two first lateral side walls. In other words, two pluralities of aligned battery cells are disposed between two adjacent traverses. These the two pluralities of aligned battery cells belong to different battery modules and contact each other between the traverses. This further improves packaging density of the battery cells within the battery system and thus improves the energy density of the battery system.

Particularly, the first plurality of aligned battery cells and the second plurality of aligned battery cells are connected via a dual module connection unit. In other words, the first plurality and the second plurality of aligned battery are electrically and mechanically connected by the dual module connection unit and are thus combined to a dual module. The dual module comprises a central gap with a width corresponding to the width of a traverse. The gap is configured for inserting a traverse and mechanically connecting the dual module to the traverse. The central gap comprises a length extension that is oriented in the second direction in a installation position of the battery module. Further preferred, each plurality of aligned battery cells is assembled via a module frame. Preferably, the module frame provides mechanical integrity to each plurality of aligned battery cells. Thus, each plurality can be mechanically and/or electrically assembled as a single unit.

According to the invention, thermal pads are disposed between at least one side wall of each battery cell and a traverse. Thus, cell swelling can be compensated, while a sufficient thermal connection is ensured.

According to a further preferred embodiment, the battery system according to the present invention further comprises a ground plate disposed below the plurality of battery cells and a system cover disposed above the plurality of battery cells. The ground plate and the system cover are respectively assembled to the first and second frame beams and/or the traverses. Although the ground plate might comprise additional cooling means, the advantage of the present invention is that it does not have to comprise cooling means. Particularly preferred, the ground plate does not comprise cooling means and/or comprises or consists of an aluminum ground layer and thermal insulation material disposed between the battery cells and the ground layer, wherein the insulation material is disposed at least in the spaces between the traverses. Further preferred, the system cover comprises a thin aluminum cover layer and thermal insulation material disposed between the battery cells and the cover layer. Another aspect of the present invention relates to a vehicle, comprising a battery system according to the present invention as described before. Preferably, the vehicle is an electrically driven vehicle, wherein the electrical energy for power driving is provided by the battery system according to the present invention. Further preferred, the battery system is mounted under the vehicle floor. Advantageously, due to the very low height of the battery system little installation place underneath the vehicle is required.

Further aspects of the present invention are defined in the dependent claims and are explained in the attached drawings and/or the following description of the attached drawings.

### Brief Description of the Drawings

Features will become apparent to those of ordinary skill in the art by describing in detail exemplary embodiments with reference to the attached drawings in which:
- Fig. 1: illustrates a schematic perspective view of a battery cell according to an embodiment;
- Fig. 2: illustrates a schematic cross section of a battery cell according to an embodiment;
- Fig. 3: illustrates a schematic perspective view of a plurality of aligned battery cells constituting part of a dual battery module according to an embodiment;
- Fig. 4: illustrates a schematic perspective view of dual battery modules assembled to a traverse according to an embodiment;
- Fig. 5: illustrates a detailed perspective view of a dual battery module assembled to a traverse according to an embodiment;
- Fig. 6: illustrates a schematic perspective view of a system frame according to an embodiment;
- Fig. 7: illustrates a schematic perspective view of a battery module according to an embodiment;
- Fig. 8: illustrates a detailed perspective view of a battery module according to an embodiment;
- Fig. 9: illustrates a schematic perspective view of the coolant piping of a system frame according to an embodiment; and
- Fig. 10: illustrates a schematic cross section of an edge portion of a battery system according to an embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value. Further, the use of "may" when describing embodiments of the present invention refers to "one or more embodiments of the present invention." Herein, the terms "upper" and "lower" are defined according to the z-axis. For example, the cover is positioned at the upper part of the z-axis, whereas the ground plate is positioned at the lower part thereof.

It will be understood that, although the terms "first," "second," "third," etc., may be used herein to describe various elements, components and/or sections, these elements, components and/or sections should not be limited by these terms. These terms are used to distinguish one element, component or section from another element, component or section. Thus, a first element, component or section described below could be termed a second element, component or section, without departing from the scope of the present invention.

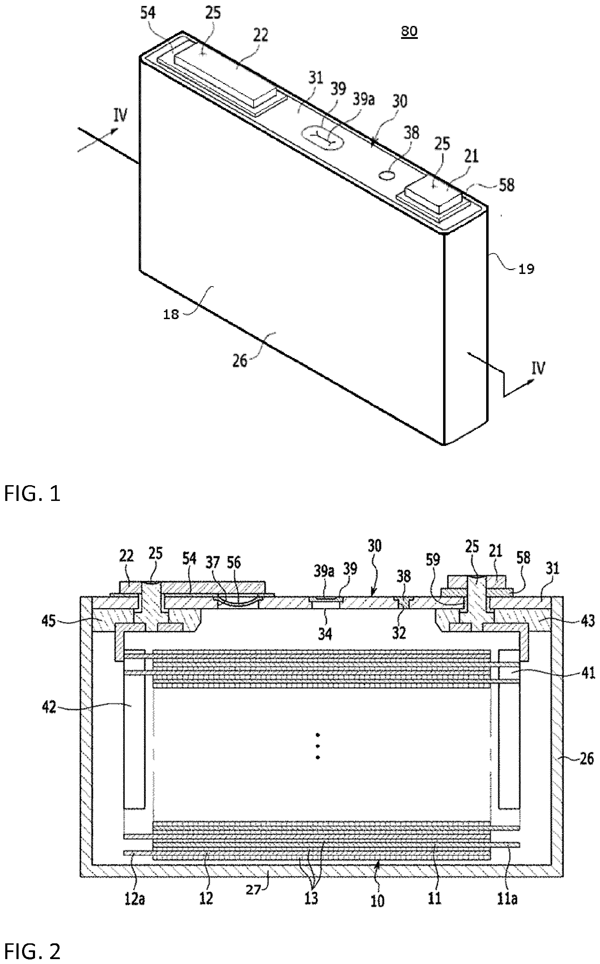

Fig. 1 is a perspective view illustrating a battery cell according to an exemplary embodiment and Fig. 2 is a cross-sectional view taken along the IV-IV line of Fig. 1.

As shown in Figs. 1 and 2, the battery cell 80 according to an embodiment may include an electrode assembly 10, and a case 26 for accommodating the electrode assembly 10, the case 26 containing an electrolyte. The battery cell 80 may also include a cap assembly 30 for sealing an opening of the case 26. The battery cell 80 will be described as a non-limiting example of a lithium ion secondary battery configured to have a prismatic shape.

The electrode assembly 10 may be formed as a jelly roll type electrode assembly by spirally winding a positive electrode 11 and a negative electrode 12 with a separator 13 therebetween. The positive electrode 11 and the negative electrode 12 may respectively include coated regions of current collectors formed of a thin metal foil, on which an active material may be coated, and may respectively include positive and negative electrode uncoated regions 11a and 12a of the current collectors on which no active material is coated. As a non-limiting example, the coated region of the positive electrode 11 may be formed by coating a base material formed of a metal foil, such as an aluminum foil, with an active material, such as transition metal oxide or the like. Also, the coated region of the negative electrode 12 may be formed by coating a base material formed of a metal foil, such as a copper or nickel foil, with an active material, such as carbon, graphite, or the like.

The positive electrode uncoated region 11a may be formed on one lateral end of the positive electrode 11 in a longitudinal direction of the positive electrode 11, and the negative electrode uncoated region 12a may be formed on one lateral end of the negative electrode 12 in a longitudinal direction of the negative electrode 12. The positive electrode uncoated region 11a and the negative electrode uncoated region 12a may be on sides that are opposite to each other with respect to the coated regions. Further, the separator 13 may include a plurality of separators, which may be spirally wound after the positive electrode 11, the negative electrode 12, and the separator 13 are alternately situated. The present invention is not limited thereto, and the electrode assembly 10 may be configured to have a structure including a plurality of sheets of the positive electrode 11, the separator 13, and the negative electrode 12 that are repeatedly stacked.

The electrode assembly 10 may be accommodated in the case 26 together with an electrolyte solution. The electrolyte solution may be made of a lithium salt, such as LiPF6 or LiBF4 with an organic solvent, such as EC, PC, DEC, EMC, or EMC. The electrolyte solution may be in a liquid, solid, or gel state. The case 26 may be configured to have a substantially cuboidal shape, and an opening may be formed at one side thereof. The case 26 may be formed of a metal, such as aluminum.

The case 26 may include a bottom surface 27 having a substantially rectangular shape, and may include a pair of first lateral walls, that are the wide side surfaces 18, 19, and a pair of second lateral walls, that are narrow side surfaces, connected vertically to end portions of the bottom surface 27, respectively, to form a space for accommodating the electrode assembly 10. The first lateral walls 18, 19 may face each other, and the second lateral walls may be positioned to face each other and may be connected to the first lateral walls 18, 19. A length of an edge at which the bottom surface 27 and a first lateral wall 18, 19 are connected to each other may be longer than that of an edge at which the bottom surface 27 and the second lateral wall are connected to each other. Preferably, adjacent first and second lateral walls enclose an angle of about 90°.

The cap assembly 30 may include a cap plate 31 for covering the opening of the case 26 by being bonded to the case 26, and may include a positive terminal 21 (first terminal) and a negative terminal 22 (second terminal), which are externally protruded from the cap plate 31 to be electrically connected to the positive electrode 11 and the negative electrode 12, respectively. The cap plate 31 may be configured to have a shape of a plate that may be extended in one direction, and that may be bonded to the opening of the case 26. The cap plate 31 may include an injection hole 32 and a vent hole 34 that communicate with an interior of the cap assembly 30. The injection hole 32 may be configured to allow the injection of the electrolyte solution, and a sealing cap 38 may be mounted thereon or therein. Further, a vent member 39 including a notch 39a, which may be opened due to a predetermined pressure may be mounted to or in the vent hole 34.

The positive terminal 21 and the negative terminal 22 may be mounted to protrude upward from the cap plate 31. The positive terminal 21 may be electrically connected to the positive electrode 11 via a current collecting tab 41, and the negative terminal 22 may be electrically connected to the negative electrode 12 via a current collecting tab 42. A terminal connecting member 25 for electrically connecting the positive terminal 21 and the current collecting tab 41 may be mounted between the positive terminal 21 and the current collecting tab 41. The terminal connecting member 25 may be inserted into a hole formed at the positive terminal 21, such that a lower portion thereof may be welded to the current collecting tab 41.

A gasket 59 for sealing may be mounted between the terminal connecting member 25 and the cap plate 31, while being inserted into the hole through which the terminal connecting member 25 may extend. Further, a lower insulating member 43, into which the lower portion of the terminal connecting member 25 may be inserted, may be mounted under the cap plate 31. A connecting plate 58 for electrically connecting the positive terminal 21 and the cap plate 31 may be mounted between the positive terminal 21 and the cap plate 31. The terminal connecting member 25 may be inserted into the connecting plate 58. Accordingly, the cap plate 31 and the case 26 may be positively electrified.

A terminal connecting member 25 for electrically connecting the negative terminal 22 and the current collecting tab 42, which is similar to the terminal connecting member 25, may be installed between the negative terminal 22 and the current collecting tab 42. The terminal connecting member 25 may be inserted into the hole formed at the negative terminal 22, such that an upper portion and a lower portion of the terminal connecting member 25 may be, respectively, welded to the negative terminal 22 and to the current collecting tab 42. A gasket for sealing, which is similar to the gasket 59, may be mounted between the negative terminal 22 and the cap plate 31, while being inserted into the hole through which the terminal connecting member 25 may extend. Further, a lower insulating member 45, which is for insulating the negative terminal 22 and the current collecting tab 42 from the cap plate 31, may be mounted under the cap plate 31.

An upper insulating member 54 for electrically insulating the negative terminal 22 and the cap plate 31 may be mounted between the negative terminal 22 and the cap plate 31. The terminal connecting member 25 may be inserted into a hole formed at the upper insulating member 54. The cap assembly 30 may include a short-circuiting hole 37, and a short-circuiting member 56 that may short-circuit the positive electrode 11 and the negative electrode 12 installed in the short-circuiting hole 37. The short-circuiting member 56 may be between the upper insulating member 54 and the cap plate 31, and the upper insulating member 54 may be configured to have a cutout that may be formed at a position corresponding to the short-circuiting member 56. The short-circuiting member 56 may overlap the negative terminal 22 exposed through the cutout, and may be separately located.

Further, the short-circuiting member 56 may be between the negative terminal 22 and the vent hole 34, and may be located closer to the negative terminal 22 than to the vent hole 34. The short-circuiting member 56 may include a convexly curved portion that curves toward the electrode assembly 10, and may include an edge portion may be formed at an outside of the curved portion and fixed to the cap plate 31. The short-circuiting member 56 may be deformed to cause a short-circuit when an internal pressure of the battery cell 80 rises. In other words, the internal pressure of the battery cell 80 may rise when a gas is generated by an unwanted reaction in the battery cell 80. When the internal pressure of the battery cell 80 is increased to be higher than a level (e.g., a predetermined level), the curved portion may be deformed to be concavely curved toward an opposite direction, thereby causing the short-circuiting member 56 to contact the negative terminal 22 to cause a short-circuit.

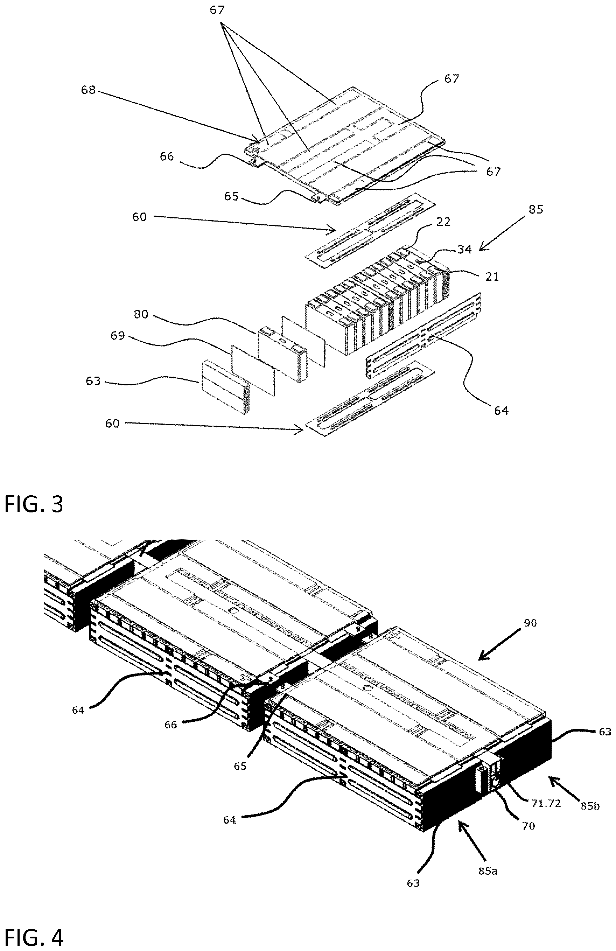

Referring to Fig. 3, a plurality of aligned battery cells 80 with substantially planar shape is arranged in an arrangement direction. In other words, in the plurality of aligned battery cells 80 the battery cells 80 are stacked in the arrangement direction with their terminals facing upwards. In order to avoid any unwanted electric contact between individual battery cells 80 isolation foils 69 are disposed between adjacent battery cells 80. A pair of module front plates 63 is provided to face wide lateral side walls 18, 19 of the battery cells 80. The module front plates 63 are mechanically coupled to a pair of module side plates 64 facing the plurality of narrow lateral side walls of the battery cells 80. Further, a pair of module top plates 60 is connected to the module front plates 63 and the module side plates 64. The module front plates 63, the module side plates 64 and the module top plates 60 constitute a module frame for assembling the plurality 85 of aligned battery cells 80, i.e. for providing mechanical integrity to the plurality 85 of aligned cells 80.

As further shown in Figs. 3 and 4, the battery cells 80 are electrically connected using a dual cell connection unit 68 as electrical interconnector. Particularly, as shown in Fig. 4, a first plurality 85a and a second plurality 85b of aligned battery cells 80 are electrically connected using one dual cell connection unit 68. According to the illustrated embodiment, a battery module 90 comprises two pluralities 85 a,b of aligned battery cells 80. As indicated in Figs. 3 and 4 the dual cell connection unit 68 (CCU) is mechanically connected to the module top and side plates 60, 64 of two pluralities 85 a,b of battery cells 80.

The dual cell connection unit 68 comprises negative and positive module terminals 65, 66 and a plurality of conducting elements 67 comprising a copper metallization. Electric contact between spaced apart conducting elements 67 is achieved via a battery cell 80. The conducting elements 67 are respectively connected to positive and negative terminals 21, 22 of secondary battery cells 80 and connect four battery cells 80 in parallel, respectively. The thus formed bundles of four battery cells 80 are connected in in series via the elements 67.

Referring to Figs. 3 and 4, a battery module 90 comprises two pluralities 85 a,b of battery cells 80 connected in a 4p3s configuration, i.e. with four battery cells 80 connected in parallel and three battery cell bundles of four cells connected in series. Thus, the resulting battery module 90 comprises a 4p6s configuration. The so formed battery module 90 may be used as power source and comprises the voltage equivalent of six battery cells 90 and the current equivalent of four battery cells 90. The battery module 90 thus provides twenty four times the power of a single battery cell 80. With each battery cell 80 providing a voltage of approximately 3.648 V the battery module 90 provides a voltage of approximately 21.89 V.

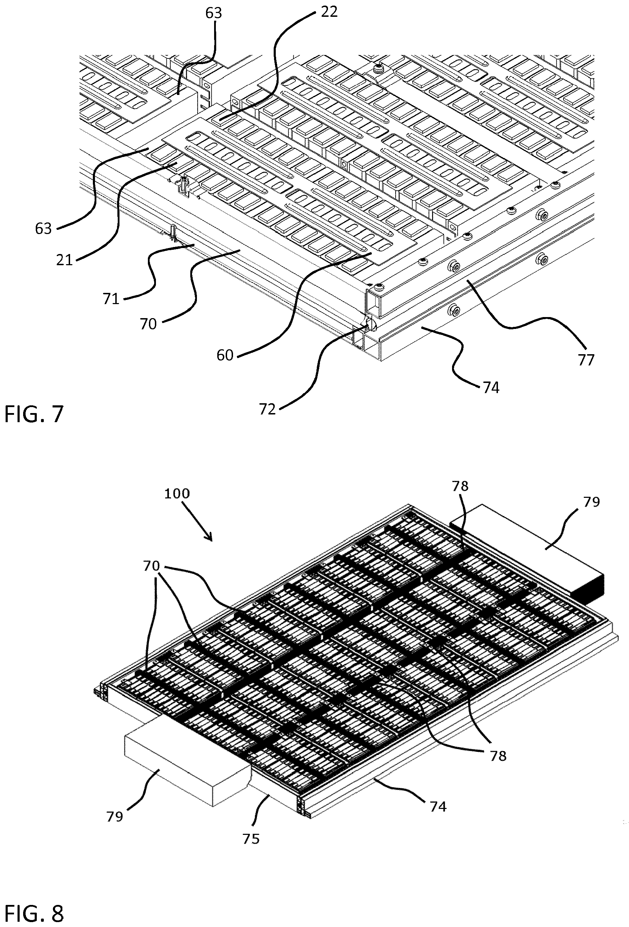

Referring to Figs. 4 and 8, three battery modules 90 are mechanically connected to one traverse 70. Two pluralities 85 a,b of aligned battery cells 80 are arranged in a first direction and are electrically connected to each other via a dual cell connection unit 68 as shown in Fig. 4. A traverse 70 is inserted into a central gap disposed between the pluralities 85 a,b of battery cells 80 and is assembled to the module side plates 64 of each of the pluralities 85 a,b of aligned battery cells 80. Thereby the battery module 90 is mechanically supported by the traverse 70.

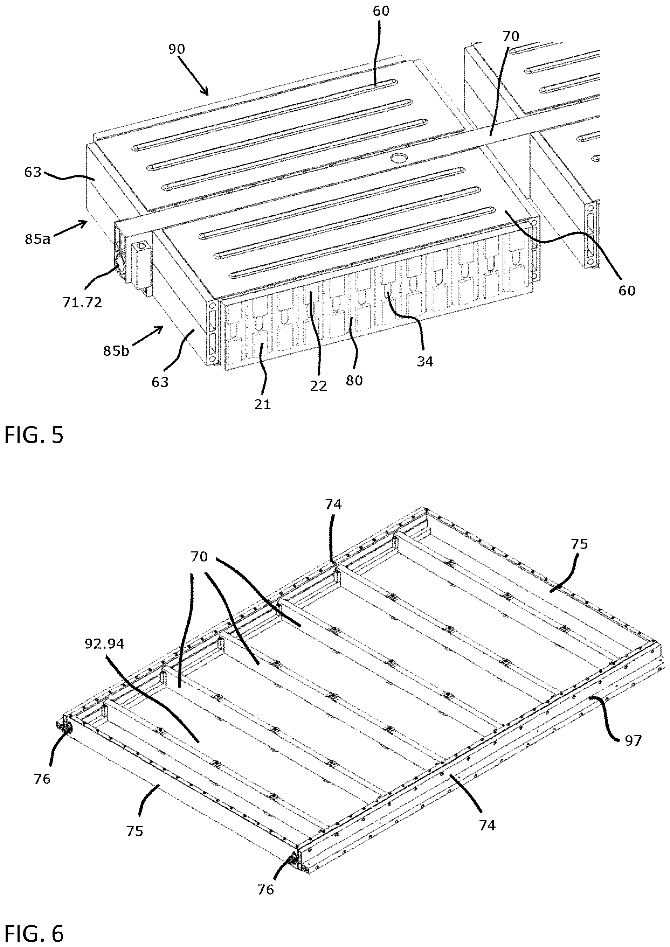

With reference to Figs. 4 and 7, each of the battery cells 80 contacts a traverse 70 with one of its narrow second lateral side wall that is substantially perpendicular to a first lateral side wall 18, 19 and has a width that is smaller than that of the first lateral side walls 18, 19. In its installation position each traverse 70 extends in the second direction and contacts each second lateral side wall facing into the first direction (or in a direction opposite to the first direction). According to this embodiment, the traverse 70 comprises at least the same height as a lateral side wall of the battery cells 80 and the terminals 21, 22 of the battery cells 80 that are arranged in the plurality of aligned battery cells 80 are facing upward in a third direction that is perpendicular to the first direction and to the second direction. According to an alternative embodiment shown in Fig. 5, each battery cell 80 contacts the traverse 70 with its bottom surface 27 that is opposite to a cap assembly 30 comprising the positive and negative cell terminals 21, 22 and the terminals 21, 22 of the battery cells 80 that are arranged in the plurality of aligned battery cells 80 are facing in to the first direction.

Referring to Fig. 6, each of the traverses 70 is assembled and mechanically connected to the pair of first frame beams 74. The first frame beams 74 are aluminum extrusion profiles and extend in a first direction. The first frame beams 74 are welded to extruded aluminum second frame beams 75 that extend in a second direction that is substantially perpendicular to the first direction. The first frame beams 74 and the second frame beams 75 constitute a rectangular system frame 97. A plurality of traverses 70 are spaced apart in the first direction and extend in the second direction. The distance between adjacent traverses 70 roughly corresponds to the width of two first lateral side walls 18, 19 of the battery cells 80. Each of the traverses 70 is assembled to the first frame beams 74 within the system frame 97 for stiffening the system frame 97. Usually before assembling the traverses 70 to the system frame 97 at least one plurality of battery modules 90 (not shown in Fig. 6) is mounted to the traverses 70.

Referring to Figs. 7 and 8, a battery system 100 comprises a system frame 97 welded from the pair of first frame beams 74 and the pair of second frame beams 75. Six traverses 70, each with three battery modules 90 attached to it, are mounted to the pair of first frame beams 74. Thus, one of the pluralities 85 a,b of battery cells 80 is arranged on each side of the traverse 70. A lateral side wall of each battery cell 80 is in direct and thus in thermal contact with a side surface of a traverse 70. The battery cells 80 are electrically connected to each other via a dual cell connection unit 68 as shown in Figs. 3, 4. The negative and positive module terminals 65, 66 of the battery modules 90 are electrically connected via a conductor rail 78.

In the battery system 100 shown in Figs. 7 and 8 eighteen battery modules 90 are connected in series, wherein each battery module 90 comprises two pluralities 85 a,b of battery cells 80 with a 4p3s configuration that are connected in series. In the battery system 100 thus four battery cells 80 are connected in parallel and 432 battery cells 80 are connected in series. With each battery module 90 comprising a voltage of approximately 21.89 V the battery system 100 comprises a voltage of approximately 394 V.

For controlling voltage and current of the battery system 100, a first and/or second E/E box 79 is mounted to one of the pair of second frame beams 75, respectively. The E/E boxes 79 are arranged outside the system frame 97 and may comprise a battery management unit (BMU), an high voltage connector, an input and/or fuse, a relay, a current sensor, an electromagnetic compatibility filter (EMC-Filter), a precharge relay and/or resistor and/or an HV interface. The battery system 100 might further comprises a plurality of cell supervision circuits (CSC) for current measurement and control of individual battery cells 80, and for balancing voltage and/or current of the battery cells 80.

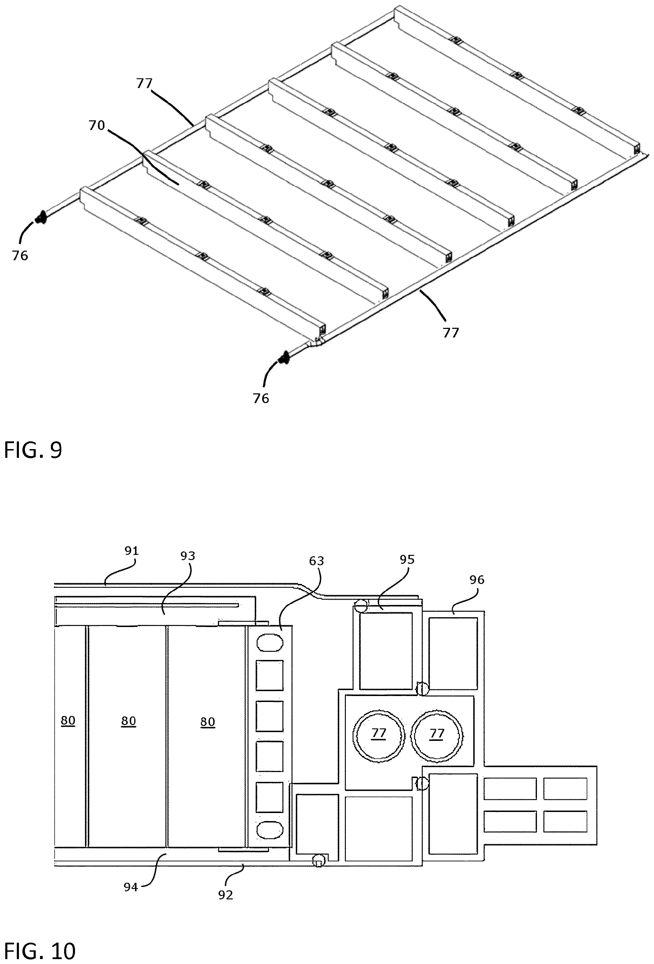

As shown in Fig. 6, 7, 9 and 10 the first frame beams 74 comprise coolant supply lines 77 that are encapsulated and integrated in the first frame beams 74. As shown in Fig. 10 the first frame beams 74 comprise a first frame beam inner section 95 and a first frame beam outer section 96 that are assembled together using fixing means. Thus, the coolant supply lines 77 can be easily integrated in the first frame beams 74 before they are assembled. The coolant supply lines may comprise metal pipes that are inserted into a hollow between the first frame inner and outer section 95, 96. As shown in Figs. 6 and 9 the coolant supply lines 77 comprise coolant ports 76 for connecting to an external coolant circuit. With reference to Figs. 4, 5 and 7 the traverses 70 comprise internal coolant ducts 71 that pass through the entire length of each traverse 70. The coolant ducts 71 are formed of steel pipes welded in the matrix of the extruded aluminum traverses 70. Alternatively, the coolant ducts 71 are formed by encapsulated piping lines respectively inserted into a suitable cavity of traverse 70. The coolant ducts 71 are fluidly connected to the coolant supply lines 77 via the coolant distributors 72 that are disposed in at least one front surface of the traverses 70.

Thus, a coolant can be distributed via an external coolant circuit and one of the coolant ports 76 to one of the coolant supply lines 77 of one of the first frame beams 74. Via the coolant distributors 71 the coolant can then be distributed to the coolant ducts 71 of each of the traverses 70. There the coolant absorbs the heat emitted by the battery cells 80, e.g. via their narrow second side walls. Cooling the battery cells 80 via the traverses 70 allows omitting cooling means in the ground plate 92. As shown in Fig. 10 only a thin aluminum ground plate 92 is welded to the system frame 97 from below the battery cells 80 and a thin aluminum system cover 91 is attached to the battery system 100 from above the cells 80. Bottom isolation elements 94 are disposed in between the traverses 70 and between the battery cells 80 and the ground plate 92. A top isolation element 93 is disposed between the battery cells and the system cover 91. Thus, a light weight battery system 100 with minimal height and reduced installation space requirements is provided.

### Reference signs

- 100: battery system
- 90: battery module
- 85(a,b): (first, second) plurality of aligned battery cells
- 80: battery cell

- 10: electrode assembly
- 11: positive electrode
- 11a: positive electrode uncoated region
- 12: negative electrode
- 12a: negative electrode uncoated region
- 13: separator
- 18: first lateral side surface
- 19: second lateral side surface
- 21: positive cell terminal (first terminal)
- 22: negative cell terminal (second terminal)
- 25: terminal connecting member
- 26: case
- 27: bottom surface
- 30: cap assembly
- 31: cap plate
- 32: injection hole
- 34: vent hole
- 37: short-circuiting hole
- 38: sealing cap
- 39: vent member
- 39a: notch
- 41, 42: current collecting tab
- 43, 45: lower insulating member
- 54: upper insulating member
- 56: short-circuiting member
- 58: connecting plane
- 59: gasket

- 60: module top plate
- 63: module front plate
- 64: module side plate

- 65: negative module terminal
- 66: positive module terminal
- 67: conducting element
- 68: dual module connection unit
- 69: isolation element

- 70: traverse
- 71: coolant duct
- 72: coolant distributor
- 74: first frame beam
- 75: second frame beam
- 76: coolant port
- 77: coolant supply line
- 78: conductor rail
- 79: E/E box

- 91: system cover
- 92: ground plate
- 93: top insulation element
- 94: bottom insulation element
- 95: first frame beam inner section
- 96: first frame beam outer section
- 97: system frame

## Claims

1. A battery system (100), comprising:
a system frame (97) with a pair of first frame beams (74) extending in a first direction and being connected to a pair of second frame beams (75) extending in a second direction substantially perpendicular to the first direction;
a plurality of traverses (70) spaced apart in the first direction and assembled to the pair of first frame beams (74);
a plurality of battery modules (90), each battery module (90) comprising a first plurality (85a) of aligned battery cells (80) stacked in the second direction and a second plurality (85b) of aligned battery cells (80) stacked in the second direction,
wherein the first (85a) and second pluralities (85a) of aligned battery cells (80) of each battery module (90) are spaced apart in the first direction and are mechanically and electrically connected to each other via a respective dual module connection unit (68),
wherein each battery module (90) is assembled to one traverse (70) being inserted into a gap between the first (85a) and second plurality (85b) of aligned battery cells (80), the width of the gap corresponding to the width of the inserted traverse (70),
wherein thermal pads are disposed between at least one side wall of each battery cell (80) and a traverse (70), and
wherein the first frame beams (74) comprise coolant supply lines (77) and at least one traverse (70) comprises a coolant duct (71) that is fluidly connected to the coolant supply lines (77).

2. The battery system (100) according to claim 1, **characterized in that** each of the coolant supply lines (77) is integrated in one of the first frame beams (74) and/or that the coolant duct (71) is integrated in the at least one traverse (70).

3. The battery system (100) according to claim 1 or 2, **characterized in that** each of the plurality of traverses (70) comprises a first front surface and a second front surface respectively connected to one of the first frame beams (74) and coolant distributors (72) disposed in at least one of the first front surface and the second front surface.

4. The battery system (100) according to any one of the preceding claims, **characterized in that** the pair of first frame beams (74) and the pair of second frame beams (75) are extruded profiles welded together to form a substantially rectangular frame (97).

5. The battery system (100) according to any one of the preceding claims,
wherein each of the battery cells (80) comprises a bottom surface (27) and lateral walls connected vertically to end portions of the bottom surface (27), and
wherein at least one side wall of each battery cell (80) is in thermal contact with a traverse (70).

6. The battery system (100) according to any one of the preceding claims,
wherein each of the battery cells (80) comprises a bottom surface (27), a pair of first lateral side walls (18, 19) and a pair of second lateral side walls with a width smaller than that of the first lateral side walls (18, 19), and
wherein each traverse (70) extends in the second direction and is in thermal contact with a second lateral side wall facing into the first direction.

7. The battery system (100) according to claim 6,
wherein the traverses (70) are spaced apart in the first direction at a distance from each other substantially corresponding to the width of two first lateral side walls (18, 19).

8. The battery system (100) according to any one of the preceding claims,
wherein at least one side wall of each battery cell (80) of the first plurality (85a) and of each battery cell (80) of the second plurality (85b) of battery cells (80) is in thermal contact with a traverse (70).

9. The battery system (100) according to any one of the preceding claims, **characterized in that** each plurality (85a, 85b) of aligned battery cells (80) is assembled via a module frame.

10. The battery system (100) according to claim 9, wherein the module frame comprises a pair of module front plates (63) facing wide lateral side walls of the battery cells (80), a pair of module side plates (64) facing narrow lateral side walls of the battery cells (80) and a pair of module top plates (60), wherein the module front plates (63) are mechanically coupled to the module side plates (64) and the module top plates (60) are connected to the module front plates (63) and module side plates (64) and wherein the dual module connection unit (68) is mechanically connected to the module top plates (60) and the module side plates (64) of the first plurality (85a) and the second plurality (85b) of aligned battery cells (80).

11. The battery system (100) according to any one of the preceding claims, further comprising a ground plate (92) disposed below the plurality of battery cells (80) and a system cover (91) disposed above the plurality of battery cells (80).

12. A vehicle comprising a battery system (100) according to any one of the claims 1 to 11.

13. The vehicle according to claim 12, **characterized in that** the battery system (100) is mounted under the vehicle floor.

## Patentansprüche

1. Batteriesystem (100), umfassend:
einen Systemrahmen (97) mit einem Paar erster Rahmenträger (74), die sich in einer ersten Richtung erstrecken und mit einem Paar zweiter Rahmenträger (75) verbunden sind, die sich in einer zweiten Richtung im Wesentlichen senkrecht zur ersten Richtung erstrecken;
eine Vielzahl von Traversen (70), die in der ersten Richtung beabstandet und an dem Paar erster Rahmenträger (74) montiert sind;
eine Vielzahl von Batteriemodulen (90), wobei jedes Batteriemodul (90) eine erste Vielzahl (85a) von ausgerichteten Batteriezellen (80), die in der zweiten Richtung gestapelt sind, und eine zweite Vielzahl (85b) von ausgerichteten Batteriezellen (80), die in der zweiten Richtung gestapelt sind, umfasst,
wobei die erste (85a) und die zweite Vielzahl (85a) von ausgerichteten Batteriezellen (80) jedes Batteriemoduls (90) in der ersten Richtung beabstandet sind und mechanisch und elektrisch über eine jeweilige Doppelmodulverbindungseinheit (68) miteinander verbunden sind,
wobei jedes Batteriemodul (90) an einer Traverse (70) montiert ist, die in einen Spalt zwischen der ersten (85a) und zweiten Vielzahl (85b) von ausgerichteten Batteriezellen (80) eingesetzt ist, wobei die Breite des Spalts der Breite der eingesetzten Traverse (70) entspricht,
wobei Wärmeleitpads zwischen mindestens einer Seitenwand jeder Batteriezelle (80) und einer Traverse (70) angeordnet sind, und
wobei die ersten Rahmenträger (74) Kühlmittelzuführungsleitungen (77) aufweisen und mindestens eine Traverse (70) einen Kühlmittelkanal (71) aufweist, der mit den Kühlmittelzuführungsleitungen (77) in Fluidverbindung steht.

2. Batteriesystem (100) nach Anspruch 1, **dadurch gekennzeichnet, dass** jede der Kühlmittelzuführungsleitungen (77) in einen der ersten Rahmenträger (74) integriert ist und/oder dass der Kühlmittelkanal (71) in die mindestens eine Traverse (70) integriert ist.

3. Batteriesystem (100) nach Anspruch 1 oder 2, **dadurch gekennzeichnet, dass** jede der Vielzahl von Traversen (70) eine erste Vorderfläche und eine zweite Vorderfläche, die jeweils mit einem der ersten Rahmenträger (74) verbunden sind, und Kühlmittelverteiler (72), die in mindestens einer der ersten Vorderfläche und der zweiten Vorderfläche angeordnet sind, umfasst.

4. Batteriesystem (100) nach einem der vorhergehenden Ansprüche, **dadurch gekennzeichnet, dass** das Paar erster Rahmenträger (74) und das Paar zweiter Rahmenträger (75) Strangpressprofile sind, die miteinander verschweißt sind, um einen im Wesentlichen rechteckigen Rahmen (97) zu bilden.

5. Batteriesystem (100) nach einem der vorhergehenden Ansprüche,
wobei jede der Batteriezellen (80) eine Bodenfläche (27) und Seitenwände aufweist, die vertikal mit Endabschnitten der Bodenfläche (27) verbunden sind, und
wobei mindestens eine Seitenwand jeder Batteriezelle (80) in thermischem Kontakt mit einer Traverse (70) steht.

6. Batteriesystem (100) nach einem der vorhergehenden Ansprüche,
wobei jede der Batteriezellen (80) eine Bodenfläche (27), ein Paar erste laterale Seitenwände (18, 19) und ein Paar zweite laterale Seitenwände mit einer geringeren Breite als die der ersten lateralen Seitenwände (18, 19) aufweist, und
wobei sich jede Traverse (70) in der zweiten Richtung erstreckt und in thermischem Kontakt mit einer zweiten lateralen Seitenwand steht, die in die erste Richtung weist.

7. Batteriesystem (100) nach Anspruch 6,
wobei die Traversen (70) in der ersten Richtung in einem Abstand voneinander beabstandet sind, der im Wesentlichen der Breite von zwei ersten lateralen Seitenwänden (18, 19) entspricht.

8. Batteriesystem (100) nach einem der vorhergehenden Ansprüche,
wobei mindestens eine Seitenwand jeder Batteriezelle (80) der ersten Vielzahl (85a) und jeder Batteriezelle (80) der zweiten Vielzahl (85b) von Batteriezellen (80) in thermischem Kontakt mit einer Traverse (70) steht.

9. Batteriesystem (100) nach einem der vorhergehenden Ansprüche, **dadurch gekennzeichnet, dass** jede Vielzahl (85a, 85b) von ausgerichteten Batteriezellen (80) über einen Modulrahmen zusammengesetzt ist.

10. Batteriesystem (100) nach Anspruch 9, wobei der Modulrahmen ein Paar von Modulfrontplatten (63), die breiten lateralen Seitenwänden der Batteriezellen (80) zugewandt sind, ein Paar von Modulseitenplatten (64), die schmalen lateralen Seitenwänden der Batteriezellen (80) zugewandt sind, und ein Paar von oberen Modulplatten (60) umfasst, wobei die Modulfrontplatten (63) mechanisch mit den Modulseitenplatten (64) gekoppelt sind und die oberen Modulplatten (60) mit den Modulfrontplatten (63) und Modulseitenplatten (64) verbunden sind und wobei die Doppelmodulverbindungseinheit (68) mechanisch mit den oberen Modulplatten (60) und den Modulseitenplatten (64) der ersten Vielzahl (85a) und der zweiten Vielzahl (85b) von ausgerichteten Batteriezellen (80) verbunden ist.

11. Batteriesystem (100) nach einem der vorhergehenden Ansprüche, das ferner eine Grundplatte (92), die unter der Vielzahl von Batteriezellen (80) angeordnet ist, und eine Systemabdeckung (91), die über der Vielzahl von Batteriezellen (80) angeordnet ist, umfasst.

12. Fahrzeug, umfassend ein Batteriesystem (100) nach einem der Ansprüche 1 bis 11.

13. Fahrzeug nach Anspruch 12, **dadurch gekennzeichnet, dass** das Batteriesystem (100) unter dem Fahrzeugboden angebracht ist.

## Revendications

1. Système de batterie (100), comprenant :
un châssis de système (97) pourvu d'une paire de premiers longerons (74) de châssis s'étendant dans une première direction et étant reliés à une paire de deuxièmes longerons (75) de châssis s'étendant dans une deuxième direction sensiblement perpendiculaire à la première direction ;
une pluralité de traverses (70) espacées dans la première direction et assemblées à la paire de premiers longerons (74) de châssis ;
une pluralité de modules de batterie (90), chaque module de batterie (90) comprenant une première pluralité (85a) d'éléments de batterie (80) alignés empilés dans la deuxième direction et une deuxième pluralité (85b) d'éléments de batterie (80) alignés empilés dans la deuxième direction,
dans lequel les première (85a) et deuxième (85a) pluralités d'éléments de batterie (80) alignés de chaque module de batterie (90) sont espacés dans la première direction et sont mécaniquement et électriquement reliés entre eux via une unité de liaison de module double (68) respective,
dans lequel chaque module de batterie (90) est assemblé à une traverse (70) qui est insérée dans un espace entre les première (85a) et deuxième (85b) pluralités d'éléments de batterie (80) alignés, la largeur de l'espace correspondant à la largeur de la traverse (70) insérée,
dans lequel des tampons thermiques sont disposés entre au moins une paroi latérale de chaque élément de batterie (80) et une traverse (70), et
dans lequel les premiers longerons (74) de châssis comprennent des conduites d'alimentation en fluide caloporteur (77) et au moins une traverse (70) comprend un conduit de fluide caloporteur (71) qui est fluidiquement relié aux conduites d'alimentation en fluide caloporteur (77).

2. Système de batterie (100) selon la revendication 1, **caractérisé en ce que** chacune des conduites d'alimentation en fluide caloporteur (77) est intégrée dans l'un des premiers longerons (74) de châssis et/ou que le conduit de fluide caloporteur (71) est intégré dans l'au moins une traverse (70).

3. Système de batterie (100) selon la revendication 1 ou 2, **caractérisé en ce que** chacune de la pluralité de traverses (70) comprend une première surface avant et une deuxième surface avant respectivement reliées à l'un des premiers longerons (74) de châssis et des distributeurs de fluide caloporteur (72) disposés dans au moins une parmi la première surface avant et la deuxième surface avant.

4. Système de batterie (100) selon l'une quelconque des revendications précédentes, **caractérisé en ce que** la paire de premiers longerons (74) de châssis et la paire de deuxièmes longerons (75) de châssis sont des profilés extrudés soudés ensemble pour former un châssis sensiblement rectangulaire (97).

5. Système de batterie (100) selon l'une quelconque des revendications précédentes,
dans lequel chacun des éléments de batterie (80) comprend une surface de fond (27) et des parois latérales reliées verticalement à des parties d'extrémité de la surface de fond (27), et
dans lequel au moins une paroi latérale de chaque élément de batterie (80) est en contact thermique avec une traverse (70).

6. Système de batterie (100) selon l'une quelconque des revendications précédentes,
dans lequel chacun des éléments de batterie (80) comprend une surface de fond (27) et une paire de premières parois latérales (18, 19) et une paire de deuxièmes parois latérales d'une largeur inférieure à celle des premières parois latérales (18, 19), et
dans lequel chaque traverse (70) s'étend dans la deuxième direction et est en contact thermique avec une deuxième paroi latérale tournée dans la première direction.

7. Système de batterie (100) selon la revendication 6,
dans lequel les traverses (70) sont espacées dans la première direction à une distance les unes des autres correspondant sensiblement à la largeur de deux premières parois latérales (18, 19).

8. Système de batterie (100) selon l'une quelconque des revendications précédentes,
dans lequel au moins une paroi latérale de chaque élément de batterie (80) de la première pluralité (85a) et de chaque élément de batterie (80) de la deuxième pluralité (85b) d'éléments de batterie (80) est en contact thermique avec une traverse (70).

9. Système de batterie (100) selon l'une quelconque des revendications précédentes, **caractérisé en ce que** chaque pluralité (85a, 85b) d'éléments de batterie (80) alignés est assemblée via un châssis de module.

10. Système de batterie (100) selon la revendication 9, dans lequel le châssis de module comprend une paire de plaques avant de module (63) faisant face à de larges parois latérales des éléments de batterie (80), une paire de plaques latérales de module (64) faisant face à d'étroites parois latérales des éléments de batterie (80), et une paire de plaques supérieures de module (60), dans lequel les plaques avant de module (63) sont mécaniquement couplées aux plaques latérales de module (64) et les plaques supérieures de module (60) sont reliées aux plaques avant de module (63) et aux plaques latérales de module (64) et dans lequel l'unité de liaison de module double (68) est mécaniquement reliée aux plaques supérieures de module (60) et aux plaques latérales de module (64) de la première pluralité (85a) et de la deuxième pluralité (85b) d'éléments de batterie (80) alignés.

11. Système de batterie (100) selon l'une quelconque des revendications précédentes, comprenant en outre une plaque de sol (92) disposée sous la pluralité d'éléments de batterie (80) et un couvercle de système (91) disposé au-dessus de la pluralité d'éléments de batterie (80).

12. Véhicule comprenant un système de batterie (100) selon l'une quelconque des revendications 1 à 11.

13. Véhicule selon la revendication 12, **caractérisé en ce que** le système de batterie (100) est monté sous le plancher de véhicule.
